# EUROPEAN PATENT APPLICATION

(11) **EP 2 218 327 A1**
(43) Date of publication of application: **18.08.2010**
(21) Application number: 08846603.2
(22) Date of filing: 06.11.2008
(51) Int. Cl.: A01N 3/00

(54) **METHOD FOR PRODUCTION OF PRESERVED FLOWER, AND PROCESSING SOLUTION FOR USE IN THE METHOD**

(30) Priority: 07.11.2007 JP 2007289335; 12.11.2007 JP 2007292679; 03.12.2007 JP 2007312482; 11.01.2008 JP 2008004164; 08.02.2008 JP 2008028264; 19.02.2008 JP 2008037158; 03.03.2008 JP 2008051561; 01.10.2008 JP 2008256311
(71) Applicant: Sakamoto, Yoshihisa, Kakegawa-shi Shizuoka 436-0342 (JP)
(72) Inventor: Sakamoto, Yoshihisa, Kakegawa-shi Shizuoka 436-0342 (JP)
(74) Representative: Vossius & Partner
(86) International application number: PCT/JP2008/070202
(87) International publication number: WO 2009/060896

(57) **Abstract**

A method for producing a preserved flower with its original natural flower color, particularly its original delicate color gradations, retained and a processing solution used in the method are provided. More specifically, the method for producing a preserved flower includes: immersing a fresh flower in a processing solution including a solution or dispersion containing one or two or more selected from a natural oil, natural resin, siloxane, synthetic resin, hydrated urethane, fatty acid ester, and surfactant; and drying the treated fresh flower. In the method for producing a preserved flower, the natural oil is oil of turpentine, stand oil, whale oil, boiled oil, linseed oil, camellia oil, olive oil, rape oil, salad oil (refined vegetable oil), sesame oil, or camphor oil; the natural resin is turpentine, glue, wax, beeswax, rubber, or Japanese lacquer; and the fatty acid ester is an ester of a saturated or unsaturated fatty acid such as lauric acid, palmitic acid, stearic acid, or myristic acid with a lower alcohol or polyalcohol.

## Description

### TECHNICAL FIELD

The present invention relates to a method for producing a preserved flower, and in particular, to a method for producing a long-life preserved flower that keeps the original color of the fresh flower for a long time, to a processing solution for the method, and to a preserved flower produced by the same.

### BACKGROUND ART

Processed fresh flowers referred to as preserved flowers are receiving increasing attention in recent years. Preserved flowers are produced by replacing water in the tissues (i.e., the tissue water) of cut flowers such as roses and carnations with a preservative solution, and their conditions can thereby be maintained close to those of the fresh flowers. Such preserved flowers are widely used for wedding bouquets, flower arrangements, and the like.

The present inventor has also conducted repeated studies on the method for producing such preserved flowers. For example, the inventor has provided a method for producing a preserved flower (Patent Document 1). This method includes immersing a fresh flower in an alcohol such as methanol, ethanol, or isopropanol, to remove water such as the tissue water from the fresh flower and then immersing the resultant flower in a polyalcohol solution, such as polyethylene glycol, used as the preservative solution to replace the tissue water with the preservative solution.
With this method, the conditions of the processed preserved flower can be satisfactorily maintained. However, the original flower color is lost during the process of removing the tissue water, and therefore the flower must be colored in the process of replacement with the preservative solution. Accordingly, the original natural color of the flower cannot be retained by this method. Therefore, it is difficult to process flowers such as roses with two colors, for example, including red and yellow, to produce preserved flowers.

Various methods of producing preserved flowers were later proposed (for example, Patent Documents 2 to 5). However, no conventional method can produce a preserved flower with the original color of the fresh flower retained.
[Patent Document 1] Japanese Patent No. 3548744
[Patent Document 2] Japanese Patent No. 3813165
[Patent Document 3] Japanese Patent Application Laid-Open No. 2004-203814
[Patent Document 4] Japanese Patent Application Laid-Open No. 2004-203815
[Patent Document 5] Japanese Patent Application Laid-Open No. 2007-119459

At present, conventional preserved flowers cannot retain the original color of the fresh flowers. Therefore, there is a demand to solve this problem to provide improved production of a preserved flower that is in a condition similar to that of the fresh flower with its natural color retained.

### DISCLOSURE OF THE INVENTION

### PROBLEMS TO BE SOLVED BY THE INVENTION

In view of the above circumstance, it is an object of the present invention to provide a method for producing a preserved flower with its original natural flower color, in particular, delicate color gradations, retained and to provide a processing solution used in the method.

### MEANS FOR SOLVING THE PROBLEMS

To solve the foregoing problems, a basic aspect of the present invention is a method for producing a preserved flower that can be kept for a long time with natural color of a fresh flower retained, the method comprising: immersing the fresh flower in a processing solution comprising one of a solution and a dispersion that contain one or two or more selected from a natural oil, a natural resin, a siloxane, a synthetic resin, a hydrated urethane, a fatty acid ester, and a surfactant; and drying the resultant fresh flower.

More specifically, in the method for producing a preserved flower, the natural oil may be oil of turpentine, stand oil, whale oil, boiled oil, linseed oil, camellia oil, olive oil, rape oil, salad oil (refined vegetable oil), sesame oil, or camphor oil, and the natural resin may be turpentine, glue, wax, beeswax, rubber, or Japanese lacquer.

More specifically, the present invention is the method for producing a preserved flower, wherein the siloxane may be an organic silicon compound selected from ethyldichlorosilane, ethyltrichlorosilane, dimethyldichlorosilane, tetramethylsilane, tetramethoxysilane, tetramethylsilane, trichlorosilane, tris(trimethylsilyl)silane, trimethylchlorosilane, polymethoxysiloxane, vinyltrichlorosilane, polymethoxysilane, methyldichlorosilane, methyltrichlorosilane, silicone oils, and straight silicone oils such as dimethyl silicone oils (such as dimethylpolysiloxane and octamethylpolysiloxane), methyl phenyl silicone oils, cyclic dimethyl silicone oils, and methyl hydrogen silicone oils.

More specifically, in the method for producing a preserved flower, the fatty acid ester may be an ester of a saturated or unsaturated fatty acid such as lauric acid, palmitic acid, stearic acid, or myristic acid with a lower alcohol or a polyalcohol.

Preferably, the present invention is the method for producing a preserved flower using the processing solution composed of the one of the solution and the dispersion containing a siloxane. More preferably, the present invention is the method for producing a preserved flower using the processing solution composed of the one of the solution and the dispersion containing a mixture of a siloxane and a fatty acid ester.

More specifically, the present invention is the method for producing a preserved flower, wherein a solvent for the one of the solution and the dispersion serving as the processing solution may be: an alcohol such as methanol, ethanol, butanol, isopropanol, isoamyl alcohol, cyclohexanol, cellosolve, butyl cellosolve, or methyl cellosolve; a petroleum product such as kerosene, gasoline, or naphtha; or a hydrocarbon-based solvent such as methyl acetate, ethyl acetate, toluene, acetone, benzene, methyl ethyl ketone, or hexane. Preferably, in the method for producing a preserved flower, the solvent for the one of the solution and the dispersion serving as the processing solution is a hydrophilic solvent.

The present invention is the method for producing a preserved flower, further comprising, before the fresh flower is immersed in the processing solution, subjecting the fresh flower to pre-treatment of immersion in a pre-treatment solution composed of the above solvent. The method for producing a preserved flower may further comprise, after the fresh flower is immersed in the processing solution: subjecting the fresh flower to post-treatment of immersion in a post treatment solution including the above solvent containing a glycol or a hydrated urethane; and drying the resultant fresh flower.

Preferably, in the method for producing a preserved flower, a pH of the processing solution, the pre-treatment solution, or the post-treatment solution is adjusted to 2 to 8, and the processing solution, the pre-treatment solution, or the post-treatment solution contains an inorganic salt or an organic acid salt.

More specifically, in the method for producing a preserved flower, the inorganic salt may be one selected from sodium chloride, potassium chloride, sodium sulfate, potassium sulfate, sodium phosphate, potassium phosphate, alum, and soda ash, and the organic acid salt may be an organic salt such as sodium acetate, sodium oxalate, potassium oxalate, sodium tartrate, potassium tartrate, or sodium succinate.

The present invention is the method for producing a preserved flower further comprising subjecting the preserved flower obtained to treatment for imparting gloss.

Another aspect of the present invention provides a processing solution for producing a preserved flower. More specifically, the processing solution for producing a preserved flower comprises one of a solution and a dispersion that contain one or two or more selected from a natural oil, a natural resin, a siloxane, a synthetic resin, a hydrated urethane, a fatty acid ester, and a surfactant.

More specifically, in the processing solution for producing a preserved flower, the natural oil may be oil of turpentine, stand oil, whale oil, boiled oil, linseed oil, camellia oil, olive oil, rape oil, salad oil (refined vegetable oil), sesame oil, or camphor oil; the natural resin may be turpentine, glue, wax, beeswax, rubber, or Japanese lacquer; and the fatty acid ester may be an ester of a saturated or unsaturated fatty acid such as lauric acid, palmitic acid, stearic acid, or myristic acid with a lower alcohol or a polyalcohol.

The present invention is the processing solution for producing a preserved flower, wherein the siloxane may be an organic silicon compound selected from ethyldichlorosilane, ethyltrichlorosilane, dimethyldichlorosilane, tetramethylsilane, tetramethoxysilane, trichlorosilane, tris(trimethylsilyl)silane, trimethylchlorosilane, vinyltrichlorosilane, polymethoxysilane, methyldichlorosilane, methyltrichlorosilane, silicone oils, and straight silicone oils such as dimethyl silicone oils (such as dimethylpolysiloxane and octamethylpolysiloxane), methyl phenyl silicone oils, cyclic dimethyl silicone oils, and methyl hydrogen silicone oils.

Another aspect of the present invention provides a preserved flower produced by one of the above production methods.

### EFFECTS OF THE INVENTION

In conventional preserved flowers, the original natural colors of flowers cannot be retained. However, with the method of the present invention, a preserved flower that is in a condition similar to that of the fresh flower with its natural color retained can be produced.
In conventional methods, a step of coloring using a coloring agent having a color close to the original color of a flower must be provided. However, such a step can be omitted, and a color close to the original natural color can be retained, so that a quality appearance can be added to wedding bouquets or flower arrangements.

It was difficult to produce preserved flowers using natural fresh flowers having complicated color patterns, such as roses having a plurality of colors such as red, pink, yellow, and white. However, a preserved flower that is in a condition similar to that of the fresh flower with a plurality of the original natural colors and the original delicate color gradations retained can be produced.

The preserved flower provided by the present invention can be kept for a long time with a condition similar to that of the fresh flower retained. More specifically, the preserved flower can be kept for one year or longer with its freshness retained without discoloration and has great advantages.

### BEST MODE FOR CARRYING OUT THE INVENTION

The present inventor has conducted various studies to produce a preserved flower with the original natural flower color, particularly the original delicate color gradations, retained. The inventor has found that a preserved flower that can be kept for a long time with the original natural color of the fresh flower retained can be produced by immersing the fresh flower in a processing solution provided by the present invention and then drying the resultant flower.

The inventor has also found that better results can be obtained by subjecting the fresh flower to pre-treatment of immersion in the solvent or dispersion solvent included in the processing solution and then subjecting the resultant flower to the immersion treatment in the processing solution.

In addition, the inventor has found that the strength of the preserved flower can be improved by subjecting the obtained preserved flower to post-treatment of immersion in a post-treatment solution containing a glycol or a hydrated urethane and that a great looking preserved flower can be obtained by subjecting the obtained preserved flower to treatment for imparting gloss. Thus, the present invention has been completed.

In the present invention, the processing solution used for immersion of the fresh flower comprises a solution or dispersion containing one or two or more selected from a natural oil, a natural resin, a siloxane, a synthetic resin, a hydrated urethane, a fatty acid ester, and a surfactant.

Examples of the natural oil include animal and vegetable oils such as oil of turpentine, stand oil, whale oil, boiled oil, linseed oil, camellia oil, olive oil, rape oil, salad oil (refined vegetable oil), sesame oil, and camphor oil. Examples of the natural resin include turpentine, glue, wax, beeswax, rubber, and Japanese lacquer.
Examples of the fatty acid ester include esters of saturated or unsaturated fatty acids such as lauric acid, palmitic acid, stearic acid, and myristic acid with lower alcohols or polyalcohols.

In the present invention, these may be used alone or as a mixture of two or more. In particular, when the fresh flower is immersed in a processing solution containing camellia oil, a siloxane, and a fatty acid ester, a particularly good preserved flower is obtained.

The main component of the natural resin such as turpentine, glue, wax, beeswax, rubber, or Japanese lacquer is an ester of a fatty acid with a monohydric or dihydric alcohol or a wax. However, a vinyl acetate resin or the like may be used instead of glue.

The siloxane means an organic silicon compound having silicon-oxygen bonds as main bonds, and so-called silicone oil that is clear, colorless, tasteless, odorless liquid is used particularly preferably.
Any of silicone oils and straight silicone oils such as dimethyl silicone oils (such as dimethylpolysiloxane and octamethylpolysiloxane), methyl phenyl silicone oils, cyclic dimethyl silicone oils, and methyl hydrogen silicone oils can be preferably used as the above silicone oil.
The silicone oil suitable for the present invention has a viscosity at 25°C of about 0.65 to 10000 cSt (centistoke) and particularly preferably about 6 to 500 cSt.
A modified silicone oil having improved solubility in water and alcohol can also be suitably used. In addition, the silicone oil having an organic group such as polyether (being, for example, polyethylene glycol, polypropylene glycol, or an ethylene glycol-propylene glycol copolymer) introduced in its side chain or terminal can be used, and the silicone oil having a hydroxyl group, alkoxy group, amino group in its polyether terminal can also be used.

Examples of the organic silicon compound include ethyldichlorosilane, ethyltrichlorosilane, dimethyldichlorosilane, tetramethylsilane, tetramethoxysilane, trichlorosilane, tris(trimethylsilyl)silane, trimethylchlorosilane, vinyltrichlorosilane, polymethoxysilane, methyldichlorosilane, and methyltrichlorosilane.

As described above, the fatty acid ester is an ester of a saturated or unsaturated fatty acid such as lauric acid, palmitic acid, stearic acid, or myristic acid with a lower alcohol or a polyalcohol. Examples of the lower alcohol include methyl alcohol, ethyl alcohol, isopropanol, butanol, octanol, pentaerythritol, and 2-ethylhexanol.
Examples of the polyalcohol include glycerin, polyoxyethylene alcohol, sorbitol, and diethanolamine.

Examples of the surfactant include various cationic, anionic, and nonionic surfactants. Of these, ether-based surfactants such as fatty acid diethanolamide, polyoxyethylene alkyl ethers, and polyoxyethylene alkyl phenyl ethers are used. When any of these is used together with an animal or vegetable oil such as camellia oil and a siloxane, particularly good results are obtained.

The processing solution of the present invention is formed as a solution or dispersion containing one or two or more selected from the above described natural oil, natural resin, siloxane, synthetic resin, hydrated urethane, fatty acid ester, and surfactant.
Any of alcohols such as methanol, ethanol, butanol, isopropanol, isoamyl alcohol, cyclohexanol, cellosolve, butyl cellosolve, and methyl cellosolve, petroleum products such as kerosene, gasoline, and naphtha, and hydrocarbon-based solvents such as methyl acetate, ethyl acetate, toluene, acetone, benzene, methyl ethyl ketone, and hexane may be used as the solvent for the solution or dispersion.

Preferably, a hydrophilic solvent is used as the solvent, including any of the above exemplified solvents. More specifically, any of hydrophilic solvents such as: 2-(2-ethylhexyloxy)ethanol; polypropylene glycol (molecular weight: about 400 to 700); and solvents having 2 to 8 carbon atoms such as butanol, isopropanol, butyric acid, acetone, 1,4-dioxane, 2-methyl-2,4-pentanediol, isoamyl alcohol, cyclohexanol, cellosolve, butyl cellosolve, methyl cellosolve, 2-ethyl-1,3-hexanediol, and 3-methyl-1.5-pentanediol is preferably used.

These solvents may be used as a mixture of two or more in any ratio. Preferably, the solvent is used in an amount that allows the above natural oil, natural resin, siloxane, synthetic resin, hydrated urethane, fatty acid ester or surfactant to be dissolved therein.

In the processing solution, the ratio of the amount of the natural oil, natural resin, siloxane, synthetic resin, hydrated urethane, fatty acid ester or surfactant to the amount of the solvent is not generally limited. Preferably, the amount contained is in the range of 10 to 100% by weight, which varies depending on the type of the fresh flower to be immersed.
The processing solution may further contain a solubilizing agent such as an anionic, cationic, or nonionic surfactant, an antifoaming agent, and other additives.

In the present invention, the fresh flower is immersed in the above processing solution for a predetermined time, for example, 1 to 2 hours to several days and preferably overnight or about 24 hours, and the resultant flower is then dried. In this manner, a preserved flower with the original natural flower color, particularly the original delicate color gradations, retained can be produced.

In the above process of the present invention, more preferred results can be obtained by subjecting the fresh flower to pre-treatment of immersion in the solvent for the solution or dispersion used as the processing solution for one hour to several days and preferably about 12 to 24 hours before the fresh flower is immersed in the processing solution.
For example, a preserved flower that can be kept for a long time with the original natural color of the fresh flower retained can be produced by subjecting the fresh flower to pre-treatment of immersion in an isopropanol solution having an adjusted pH for 24 hours to replace the tissue water, transferring the resultant flower to a processing solution container, immersing the flower in the processing solution for 24 hours, removing the resultant flower, and then air-drying. When the pre-treatment is not performed, the processing time in the processing solution may be set to 2 to 3 days.

Preferably, the solvent used in the pre-treatment is the same as the solvent used in the processing solution. The solvent used in the pre-treatment may be any of the above described solvents or dispersion solvents such as alcohols (such as methanol, ethanol, butanol, isopropanol, isoamyl alcohol, cyclohexanol, cellosolve, butyl cellosolve, and methyl cellosolve), petroleum products (such as kerosene, gasoline, and naphtha), and hydrocarbon solvents (such as methyl acetate, ethyl acetate, toluene, acetone, benzene, methyl ethyl ketone, and hexane). Any of hydrophilic solvents such as 2-(2-ethylhexyloxy)ethanol, polypropylene glycol (molecular weight: about 400 to 700), and solvents having 2 to 8 carbon atoms (such as butanol, isopropanol, butyric acid, acetone, 1,4-dioxane, 2-methyl-2,4-pentanediol, isoamyl alcohol, cyclohexanol, cellosolve, butyl cellosolve, methyl cellosolve, 2-ethyl-1,3-hexanediol, and 3-methyl-1,5-pentanediol) is particularly preferably used for the pre-treatment.

Preferably, the pH of the pre-treatment solution or the processing solution is adjusted using acetic acid, oxalic acid, citric acid, formic acid, amino acid, hydrochloric acid, sodium hydroxide, sodium carbonate, sodium hydrogen carbonate, sodium hypochlorite, a phosphate such as disodium phosphate or potassium dihydrogen phosphate, a sulfate, a potassium glycerin solution, or a mixture thereof.
A preferred pH is an optimal pH for a fresh flower used, and it is preferable that the solutions have a buffering action. For example, good results are expected when pre-treatment and processing solutions having a pH of about 2 to 3 are used for red flowers. Preferably, blue flowers are processed in a pH range higher than the above range. A color close to the natural flower color can be retained when a suitable amount of an inorganic salt such as sodium chloride, potassium chloride, sodium sulfate, potassium sulfate, sodium phosphate, potassium phosphate, alum, or soda ash or an organic salt such as sodium acetate, sodium oxalate, potassium oxalate, sodium tartrate, potassium tartrate, or sodium succinate is added to the pre-treatment solution or the processing solution. Preferably, such a salt is added in an amount of about 1 to 5%.

To correct the strength of the preserved flower and to mitigate the influence of the residues of the processing solution and other solutions, the obtained preserved flower may be subjected to post-treatment using polypropylene, glycerin, a glycol such as polyethylene glycol 200, 400, 1000, or 2000, and polypropylene glycol, a hydrated urethane, a mixture thereof, or the solvent solution used for the pre-treatment.
Preferably, the pH of the post-treatment solution is adjusted, and an inorganic salt or organic salt is added thereto.

No particular limitation is imposed on the fresh flower processed using the processing solution according to the present invention. For example, any of cut flowers such as roses, carnations, hydrangeas, denfares, sunflowers, chrysanthemums, eustomas, delphiniums, jasmines, moth orchids, globe amaranths, and celosias may be used. The processing solution can be used for any flowering plants (including their leaves).

In the production method of the present invention, after completion of the immersion treatment in the processing solution,
the treated fresh flower is removed from the processing solution and then air-dried or forced dried, whereby the desired preserved flower is produced.
The surface of the treated fresh flower may be coated to impart gloss before or after the treated fresh flower is dried or before or after the strength is corrected. The gloss is imparted using one or a mixture of two or more of gloss agents such as epoxy resin, lacquer, varnish, and urethane resin. A gloss agent diluted to an appropriate concentration with the solvent used in the pre-treatment solution may be used. The gloss is imparted by immersing the treated fresh flower in the gloss solution for 1 to 2 minutes to several days. The strength correction and the gloss treatment may be performed simultaneously.

The preserved flower of the present invention is produced in the manner described above. The preserved flower obtained is in a condition similar to that of the fresh flower and can be kept for a long time with the original natural color retained without discoloration.

### [Examples]

Hereinafter, the present invention will be described by way of specific Examples, but the invention is not limited thereto.

### Example 1:

50 mL of a mixed solution of camellia oil (50%) and rape oil (50%) was mixed with 100 mL of a mixed solution of naphtha (50%, vegawhite 1520, product of Sanwa Kagaku Sangyo Co., Ltd.) and kerosene (50%). A pink rose was immersed in the prepared mixed solution for 24 hours, and the treated pink rose was air-dried for 48 hours.
The pink rose was kept fresh for 3 months or more with the natural color retained.

### Example 2:

30 g of beeswax melted in a hot water bath was mixed with 100 mL of a mixed solution of white gasoline (90%), methanol (5%), and ethanol (5%) to prepare a mixed solution. A red rose was immersed in the prepared mixed solution for 48 hours, and the treated red rose was forced-dried in a dish dryer for 30 minutes.
The red rose was kept fresh for 6 months or more with the original color retained.

### Example 3:

A solution containing 50 g of vinyl acetate resin dissolved in 100 mL of ethyl acetate was prepared. A purple denfare was immersed in the prepared solution for 2 hours, and the treated purple denfare was air-dried for 12 hours. Then the dried denfare was immersed in a solution prepared by dissolving 50 mL of a two-part epoxy resin in 200 mL of methyl ethyl ketone for 15 minutes, and the resultant denfare was air-dried for 12 hours.

The purple denfare was kept fresh for two years or more with the natural color and gloss retained.

### Example 4:

A pink rose was immersed for 24 hours in a solution that was prepared by adding 2 percent by weight of oxalic acid to 100 mL of isopropanol to adjust its pH. Then the rose was transferred to 100 mL of a 5:3 mixed solution of isopropanol and siloxane (a 9:1 mixed solution of dimethyl silicone oils (KF-96-10cs and KF-96-500cs, products of Shin-Etsu Chemical Co., Ltd.)) and was immersed therein for 24 hours. The rose was then removed from the solution and air-dried for 24 hours.
The resultant pink rose was kept fresh for one year or more with the original natural color retained.

### Example 5:

A pink rose was immersed for 24 hours in a solution that was prepared by adding 2 percent by weight of citric acid to 100 mL of isopropanol to adjust its pH. Then the rose was transferred to 100 mL of a 3:1:1 mixed solution of isopropanol, siloxane (KF-96-10cs , product of Shin-Etsu Chemical Co., Ltd.), and hydrated urethane (SANPRENE C-810, product of Sanyo Chemical industries Ltd.) and immersed therein for 24 hours. The rose was then removed from the solution and air-dried for 24 hours.
The resultant pink rose was kept fresh for one year or more with the original natural color retained.

### Example 6:

A purple eustoma was immersed for 24 hours in a solution prepared by mixing 80 mL of methyl laurate (methyl laurate 95, product of NOF Corporation) with 100 mL of isopropanol. Then the treated purple eustoma was forced-dried in a dish drier for 20 minutes.
The resultant eustoma was kept fresh for one year or more with its natural color retained.

### Example 7:

A red rose was immersed for 24 hours in a solution that was prepared by adding 2 percent by weight of citric acid to 100 mL of isopropanol to adjust its pH. Then the treated rose was transferred to 100 mL of a 5:3 mixed solution of isopropanol and polyoxyethylene-monolaurate (a nonionic surfactant, product of NOF Corporation) and immersed therein for 24 hour. The rose was then removed from the solution and air-dried for 24 hours.
The resultant red rose was kept fresh for one year or more with the original natural color retained.

### Example 8:

A pink rose was immersed for 24 hours in a solution that was prepared by adding 2 percent by weight of citric acid to 100 mL of isopropanol to adjust its pH. Then the rose was transferred to 100 mL of a 3:1:1 mixed solution of isopropanol, siloxane (KF-96-10cs, product of Shin-Etsu Chemical Co., Ltd.), and ethyl laurate (ethyl laurate 95, product of NOF Corporation) and immersed therein for 24 hours. The rose was then removed from the solution and air-dried for 24 hours.
The resultant pink rose was kept fresh for one year or more with the original natural color retained.

### Example 9:

A pink and white two-tone color rose was immersed for 24 hours in a solution that was prepared by adding about 5 percent by weight of citric acid to 100 mL of isopropanol to adjust its pH to 3.5 (measured using a pH/mV meter, SK-620PH, product of Sato Keiryoki Mfg. Co., Ltd.). Then isopropanol, siloxane (KF-96-10cs, product of Shin-Etsu Chemical Co., Ltd.), methyl laurate (methyl laurate 95, product of NOF Corporation), and methyl ethyl ketone were mixed in a ratio of 1:2:1:1.5, and the pH of the mixed solution was adjusted to 3.5 by adding citric acid thereto. The treated rose was transferred to 100 mL of the prepared solution and immersed therein for 24 hours. The rose was removed from the solution and air-dried for 24 hours.
The resultant pink and white two-tone color rose was kept fresh for one year or more with the original two-tone color retained.

### Example 10:

A purple gentian with branches was immersed for 24 hours in a solution that was prepared by adding about 1 percent by weight of DPD magic (see the note below) to 100 mL of isopropanol to adjust its pH to 5.5. Then isopropanol, siloxane (KF-96-10cs, product of Shin-Etsu Chemical Co., Ltd.), ethyl laurate (ethyl laurate 95, product of NOF Corporation), and methyl ethyl ketone were mixed in a ratio of 1:2:1:1.5, and the pH of the solution was adjusted to 5.5 by adding DPD magic thereto. The gentian was transferred to 100 mL of the prepared solution and immersed therein for 24 hours. The gentian was then removed from the solution and air-dried for 24 hours.
The flower of the resultant purple gentian was kept fresh for one year or more with the original purple color retained, and the leaves were kept fresh for one year or more with the original green color retained.
Note: DPD magic is a trade name of Nippon Soda Co., Ltd. and is a mixture of N,N-diethyl phenylene diamine sulfate, sodium sulfate anhydride, disodium hydrogen phosphate, potassium dihydrogen phosphate, and trans-1,2-cyclohexanediamine tetraacetic acid hydrate.

### Example 11:

A pink rose was immersed for 24 hours in a solution prepared by mixing 2 percent by weight of common salt with 100 mL of isopropanol. Then the treated rose was transferred to a solution prepared by mixing isopropanol, siloxane, methyl laurate, and methyl ethyl ketone in a ratio of 1:3:1:1 and adding 2 percent by weight of common salt thereto and was immersed therein for 24 hours. The rose was removed from the solution and air-dried for 24 hours.
The flower of the resultant pink rose was kept fresh for one year or more with the original pink color retained, and the branches were kept fresh for one year or more with the original green color retained.

### INDUSTRIAL APPLICABILITY

As described above, the present invention provides a method for producing a preserved flower with the original natural flower color, particularly the original delicate color gradations, retained and has great industrial applicability.

## Claims

1. A method for producing a preserved flower that can be kept for a long time with natural color of a fresh flower retained, the method comprising: immersing the fresh flower in a processing solution comprising one of a solution and a dispersion that contain one or two or more selected from a natural oil, a natural resin, a siloxane, a synthetic resin, a hydrated urethane, a fatty acid ester, and a surfactant; and drying the resultant fresh flower.

2. The method for producing a preserved flower according to claim 1, wherein the natural oil is oil of turpentine, stand oil, whale oil, boiled oil, linseed oil, camellia oil, olive oil, rape oil, salad oil (refined vegetable oil), sesame oil, or camphor oil, and the natural resin is turpentine, glue, wax, beeswax, rubber, or Japanese lacquer.

3. The method for producing a preserved flower according to claim 1, wherein the siloxane is an organic silicon compound selected from ethyldichlorosilane, ethyltrichlorosilane, dimethyldichlorosilane, tetramethylsilane, tetramethoxysilane, trichlorosilane, tris(trimethylsilyl)silane, trimethylchlorosilane, vinyltrichlorosilane, polymethoxysiloxane, methyldichlorosilane, methyltrichlorosilane, a silicone oil, a dimethyl silicone oil, a methyl phenyl silicone oil, a cyclic dimethyl silicone oil, and a methyl hydrogen silicone oil.

4. The method for producing a preserved flower according to claim 1, wherein the fatty acid ester is an ester of a saturated or unsaturated fatty acid such as lauric acid, palmitic acid,
stearic acid, or myristic acid with a lower alcohol or a polyalcohol.

5. The method for producing a preserved flower according to claim 1, wherein the processing solution composed of one of the solution and the dispersion containing a siloxane is used.

6. The method for producing a preserved flower according to claim 1, wherein the processing solution composed of one of the solution and the dispersion containing a mixture of a siloxane and a fatty acid ester.

7. The method for producing a preserved flower according to claim 1, wherein a solvent for one of the solution and the dispersion serving as the processing solution is an alcohol such as methanol, ethanol, butanol, isopropanol, isoamyl alcohol, cyclohexanol, cellosolve, butyl cellosolve, or methyl cellosolve; a petroleum product such as kerosene, gasoline, or naphtha; or a hydrocarbon-based solvent such as methyl acetate, ethyl acetate, toluene, acetone, benzene, methyl ethyl ketone, or hexane.

8. The method for producing a preserved flower according to claim 7, wherein the solvent for one of the solution and the dispersion serving as the processing solution is a hydrophilic solvent.

9. The method for producing a preserved flower according to claim 1, wherein further comprising, before the fresh flower is immersed in the processing solution, subjecting the fresh flower to pre-treatment of immersion in a pre-treatment solution composed of the solvent as set forth in claim 7 or 8.

10. A method for producing a preserved flower, comprising: immersing a fresh flower in a processing solution; subjecting the fresh flower to post-treatment of immersion in a post treatment solution including the solvent as set forth in claim 7 or 8 containing a glycol or a hydrated urethane; and drying the resultant fresh flower.

11. The method for producing a preserved flower according to any of claims 1 to 10, wherein a pH of the processing solution, the pre-treatment solution, or the post-treatment solution is adjusted to 2 to 8.

12. The method for producing a preserved flower according to any of claims 1 to 10, wherein the processing solution, the pre-treatment solution, or the post-treatment solution contains an inorganic salt or an organic acid salt.

13. The method for producing a preserved flower according to claim 12, wherein the inorganic salt is one selected from sodium chloride, potassium chloride, sodium sulfate, potassium sulfate, sodium phosphate, potassium phosphate, alum, and soda ash, and the organic acid salt is an organic salt such as sodium acetate, sodium oxalate, potassium oxalate, sodium tartrate, potassium tartrate, or sodium succinate.

14. The method for producing a preserved flower according to any of claims 1 to 13, further comprising subjecting the preserved flower obtained to treatment for imparting gloss.

15. A processing solution for producing a preserved flower, comprising one of a solution and a dispersion that contain one or two or more selected from a natural oil, a natural resin, a siloxane, a synthetic resin, a hydrated urethane, a fatty acid ester, and a surfactant.

16. The processing solution for producing a preserved flower according to claim 15, wherein the natural oil is oil of turpentine, stand oil, whale oil, boiled oil, linseed oil, camellia oil, olive oil, rape oil, salad oil (refined vegetable oil), sesame oil, or camphor oil, and the natural resin is turpentine, glue, wax, beeswax, rubber, or Japanese lacquer.

17. The processing solution for producing a preserved flower according to claim 15, wherein the siloxane is an organic silicon compound selected from ethyldichlorosilane, ethyltrichlorosilane, dimethyldichlorosilane, tetramethylsilane, tetramethoxysilane, trichlorosilane, tris(trimethylsilyl)silane, trimethylchlorosilane, vinyltrichlorosilane, polymethoxysilane, methyldichlorosilane, methyltrichlorosilane, a silicone oil, a dimethyl silicone oil, a methyl phenyl silicone oil, a cyclic dimethyl silicone oil, and a methyl hydrogen silicone oil.

18. The processing solution for producing a preserved flower according to claim 15, wherein the fatty acid ester is an ester of a saturated or unsaturated fatty acid such as lauric acid, palmitic acid, stearic acid, or myristic acid with a lower alcohol or a polyalcohol.

19. A preserved flower obtained by the production method according to claims 1 to 14.
